# EUROPÄISCHE PATENTSCHRIFT

(11) **EP 1 810 561 B1**
(45) Veröffentlichungstag und Bekanntmachung des Hinweises auf die Patenterteilung: **09.06.2010**
(21) Anmeldenummer: 06450011.9
(22) Anmeldetag: 18.01.2006
(51) Int. Cl.: A01B 59/042, B60D 1/46

(54) **Zugvorrichtung**
Towing device
Dispositif de traction

(43) Veröffentlichungstag der Anmeldung: 25.07.2007
(73) Patentinhaber: Scharmüller, Josef, 4892 Fornach (AT)
(72) Erfinder: Scharmüller, Josef, 4892 Fornach (AT)
(74) Vertreter: Gibler, Ferdinand

(56) Entgegenhaltungen:
- EP-A- 0 136 989
- EP-A- 1 437 241
- DE-B3- 10 257 595
- GB-A- 1 483 588
- GB-A- 2 289 834

## Beschreibung

Die Erfindung betrifft eine Zugvorrichtung für ein landwirtschaftliches oder industrielles Fahrzeug, mit einem im Wesentlichen geradlinigen Führungsmittel, das an dem Fahrzeug im Wesentlichen vertikal anordenbar ist, und mit einem entlang des Führungsmittels um einen ersten Hubweg verstellbaren Kupplungsteil mit einer oberen Transportstellung und einer unteren abgesenkten Stellung.

Derartige Zugvorrichtungen, die meist am Heck von landwirtschaftlichen oder industriellen Fahrzeugen, beispielsweise Traktoren, Hubstapler, etc., angebracht werden, sind bekannt, siehe zum Beispiel GB 1 483 588 und werden auch als "vertical pick-up hitch" bezeichnet. Sie werden insbesondere dann verwendet, wenn zum Anbringen einer Zug- bzw. Anhängevorrichtung am Heck des jeweiligen Fahrzeugs nur begrenzter Bauraum zur Verfügung steht. Die im Wesentlichen geradlinigen Führungsmittel können meist auch noch nachträglich am Fahrzeug angebracht werden, da sie in Längsrichtung des Fahrzeugs wenig Bauraum benötigen. Der Kupplungsteil ist bei derartigen Zugvorrichtungen zumeist an einem kasten- oder rohrförmigen, oft als Schlitten bezeichneten Teil starr montiert, welcher in dem Führungsmittel höhenverstellbar geführt ist.

Zum Ankuppeln von Anhängern wird der zumeist einen Kupplungshaken aufweisende Kupplungsteil an dem Schlitten, also dem kasten- oder rohrförmigen Teil entlang der vertikalen Führungsmittel nach unten bewegt, bis dieser eine Kupplungsöse eines Anhängers untergreifen kann. Insbesondere bei Einachsanhängern liegt jedoch die Kupplungsöse oft am Boden auf, sodass der Kupplungshaken in den Boden eindringen muss, um unter die Kupplungsöse greifen zu können. Dabei fährt allerdings der gesamte kasten- bzw. rohrförmige Teil nach unten, sodass dieser insbesondere beim anschließenden Zurücksetzen des Fahrzeugs einer starken Reibbelastung am Boden ausgesetzt ist. Die gesamte Konstruktion nimmt dabei überdies Schmutz und Bodenmaterial mit auf, welche dann auch in die Zugöse beziehungsweise Kugelpfanne des Anhängers oder Arbeitsgeräts eindringen. Diese Zugvorrichtungen weisen als Folge einen beträchtlichen Verschleiß auf, was zu hohen Wartungs- und Reparaturkosten führt.

Es sind auch Zugvorrichtungen bekannt geworden, bei welchen der Kupplungsteil bzw. der Kupplungshaken nicht geradlinig nach unten verschiebbar ist, sondern um eine horizontale, quer zur Fahrzeuglängsachse liegende Achse nach unten verschwenkbar ist. Der Kupplungsteil ist dabei an einem rahmenförmigen, nach unten klappbaren Teil angebracht. Da bei dieser Ausführung eines "pick-up hitch" der Kupplungsteil in seiner abgesenkten Stellung schräg nach unten steht, kommt nur dieser, und nicht auch der rahmenförmige Teil der Konstruktion mit dem Boden in Kontakt. Nachteilig an diesen Zugvorrichtungen ist jedoch insbesondere der enorme Platzbedarf, da zur Erzielung des erforderlichen Hakenhubs von 500 mm und mehr sehr lange, an dem Fahrzeug weit nach vorne reichende rahmenförmige Teile nötig sind.

Es ist daher die Aufgabe der vorliegenden Erfindung, eine Zugvorrichtung anzugeben, die einen ausreichend großen Hakenhub erzielen kann, die einen geringen Platzbedarf hat und die sich überdies durch einen geringen Verschleiß auszeichnet.

Diese Aufgabe wird dadurch gelöst, dass bei einer Zugvorrichtung der eingangs genannten Art der Kupplungsteil verschwenkbar ist.

Dadurch ergibt sich der Vorteil, dass der Kupplungsteil in seiner entlang des im Wesentlichen geradlinigen Führungsmittels nach unten bewegten Stellung zusätzlich zu dieser Vertikalbewegung in eine nach unten weisende Stellung verschwenkt werden kann. Dabei kann der Kupplungsteil eine Position erreichen, in welcher er den tiefsten Punkt der gesamten Zugvorrichtung darstellt, sodass bei einem vollständigen Absenken nur der Kupplungsteil mit dem Boden in Kontakt kommt. Ein Verschleiß durch Reibbelastung bleibt daher auf den Kupplungsteil beschränkt.

Besonders vorteilhaft ist es, wenn der Kupplungsteil derart verschwenkbar ist, dass sich ein über den ersten Hubweg des im Wesentlichen geradlinigen Führungsmittels hinausgehender, zusätzlicher zweiter Hubweg ergibt. Dadurch kann eine aus zwei Teilbewegungen zusammengesetzte Bewegung des Kupplungsteils erreicht werden, wodurch bei kompakter Bauweise ein dennoch großer Hakenhub erzielt werden kann.

Vorteilhafterweise kann der Kupplungsteil um eine im Wesentlichen horizontale Achse verschwenkbar sein. Dies hat den Vorteil eines besonders großen zusätzlichen Hakenhubs durch die Schwenkbewegung.

Gemäß einer Weiterbildung der Erfindung kann der Kupplungsteil in der abgesenkten Stellung um einen Winkel insbesondere zwischen 10° und 60°, bevorzugt zwischen 15° und 45°, besonders bevorzugt etwa 30°, verschwenkbar sein. Dies hat insbesondere beim Aufnehmen und Ankuppeln einer Zugöse Vorteile. Bei einem Verschwenken des Kupplungsteils in der unteren, abgesenkten Stellung weiter nach unten kann die Zugöse sofort sicher aufgenommen werden. Danach kann der Kupplungsteil wieder nach oben verschwenkt werden. Beim anschließenden geradlinigen Hochbewegen des Kupplungsteils liegt die Zugöse bereits sicher auf dem Kupplungsteil auf.

Alternativ oder zusätzlich kann der Kupplungsteil in der oberen Transportstellung um einen Winkel (α), insbesondere zwischen 10° und 60°, bevorzugt zwischen 15° und 45°, besonders bevorzugt etwa 30°, verschwenkbar sein. Dadurch ist sichergestellt, dass beim Nachuntenbewegen des Kupplungsteils nur dieses mit dem Boden in Kontakt kommt und der übrige Aufbau der Zugvorrichtung keinem Verschleiß durch Bodenberührung unterliegt.

Bevorzugterweise kann vorgesehen sein, dass der Kupplungsteil einen Zughaken aufweist. Dieser eignet sich insbesondere dafür, Zugösen von Anhängern und Arbeitsgeräten aufzunehmen. Dies ergibt eine besonders einfach herzustellende und preiswerte Lösung.

Gemäß einer alternativen Ausgestaltung kann der Kupplungsteil eine Zugkugel aufweisen. Diese ist insbesondere dann vorteilhaft, wenn Kugelpfannen von Anhängern und

Arbeitsgeräten aufzunehmen sind. Diese Lösung weist über eine hohe Trag- und Zugkraft bei geringem Verschleiß auf.

In einer Weiterbildung der Erfindung kann vorgesehen sein, dass zumindest ein erster Hydraulikzylinder zur Bewegung des Kupplungsteils entlang des im Wesentlichen geradlinigen Führungsmittels angeordnet ist. Dadurch kann der Kupplungsteil ferngesteuert, insbesondere vom Fahrersitz aus, in seiner Höhe verstellt werden, ohne dass der Bediener seinen Platz verlassen müsste.

In diesem Zusammenhang kann vorgesehen sein, dass der erste Hydraulikzylinder auch zur Schwenkbewegung des Kupplungsteils vorgesehen ist. Dadurch ist es möglich, beide Bewegungen - also die geradlinige Höhenverstellung und die Schwenkbewegung des Kupplungsteils - mit einem einzigen Hydraulikzylinder zu betätigen. Alternativ können aber auch zumindest zwei getrennt wirkende Hydraulikzylinder für diese Aufgaben angeordnet sein. In beiden Fällen ergibt sich eine zusammengesetzte Bewegung aus einer geradlinigen Höhenverstellung und einer Schwenkbewegung des Kupplungsteils.

In einer vorteilhaften Variante kann zumindest ein Sicherungsmittel, insbesondere eine Klinke, zur Sicherung des Kupplungsteils in der oberen Transportstellung vorgesehen sein. Dadurch ist es möglich auch ohne weiteres Aufbringen eines Hydraulikdrucks den Kupplungsteil in seiner oberen Transportstellung zu halten.

In diesem Zusammenhang kann zumindest ein zweiter Hydraulikzylinder zur Betätigung des Sicherungsmittels, insbesondere der Klinke, vorgesehen sein. Dies hat den Vorteil, dass auch das Sicherungsmittel beziehungsweise die Klinke ferngesteuert, insbesondere vom Fahrersitz aus, geöffnet und geschlossen werden kann. Ein Verlassen des Fahrersitzes zum Ankuppeln oder Sichern eines Anhängers bzw. Arbeitsgeräts ist dann nicht mehr nötig.

Vorteilhafterweise kann der Kupplungsteil ein gehärtetes Metall und/oder ein Schmiedeteil umfassen. Der Kupplungsteil ist dann besonders gut gegen Verschleiß geschützt. Da nur der Kupplungsteil selbst mit dem Boden in Berührung kommt, ist es nicht nötig, die übrigen Teile einer Härtung zu unterziehen. Diese können in ihrer Konstruktion und Materialauswahl daher günstig hergestellt werden.

Gemäß einer bevorzugten Ausgestaltung kann der erste Hubweg zwischen 300 mm und 800 mm, insbesondere zwischen 450 mm und 550 mm, besonders bevorzugt etwa 500 mm betragen. Dadurch ist es möglich, den größten Teil des zum Ankuppeln nötigen Hubwegs bzw. den ganzen nötigen Hubweg bereits durch die geradlinige Bewegung zu realisieren.

Besonders vorteilhaft ist es, wenn der zusätzliche zweite Hubweg durch die Schwenkbewegung des Kupplungsteils an dessen Ende zwischen 50 mm und 300 mm, insbesondere zwischen 100 mm und 200 mm, besonders bevorzugt etwa 150 mm beträgt. Dadurch ist sichergestellt, dass der Kupplungsteil in seiner unteren abgesenkten Stellung über die übrige Konstruktion der Zugvorrichtung nach unten vorsteht und somit der einzige Teil ist, welcher den Boden berührt.

Gemäß einer Weiterbildung der Erfindung kann vorgesehen sein, dass in oder an dem Führungsmittel ein Halteteil, insbesondere ein Schlitten, geführt ist. Dadurch ergibt sich eine einfache, starre Konstruktion des die geradlinige Bewegung sicherstellenden Führungsmittels.

In besonders bevorzugter Ausgestaltung der Erfindung kann vorgesehen sein, dass der Kupplungsteil an dem Halteteil, insbesondere dem Schlitten, verschwenkbar angeordnet ist. Die Ausführung der Schwenkbarkeit kann dabei auf einen kleinen Teil der gesamten Zugvorrichtung, insbesondere auf den Kupplungsteil allein, beschränkt bleiben. Dies erlaubt wiederum eine einfache Konstruktion und wenige notwendige Änderungen gegenüber einer herkömmlichen Zugvorrichtung, sodass solche auch nachträglich umgebaut werden können.

Gemäß einer Weiterbildung der Erfindung kann das Führungsmittel ein kasten- oder rohrförmiges Bauteil umfassen. Dies hat den Vorteil einer besonders stabilen Ausführung der Höhenverstellung.

Die Erfindung wird unter Bezugnahme auf die beigeschlossenen Zeichnungen, in welchen Ausführungsformen beispielhaft dargestellt sind, näher beschrieben. Dabei zeigt:
Fig. 1 eine axonometrische Darstellung einer erfindungsgemäßen Zugvorrichtung mit dem Kupplungsteil in seiner abgesenkten Stellung,
Fig. 2 die Zugvorrichtung in einer Ansicht von hinten mit dem Kupplungsteil in der oberen Transportstellung,
Fig. 3 die Zugvorrichtung in einer Seitenansicht mit dem Kupplungsteil in der oberen Transportstellung,
Fig. 4 die Zugvorrichtung in einer Seitenansicht mit dem Kupplungsteil in der unteren abgesenkten Stellung.

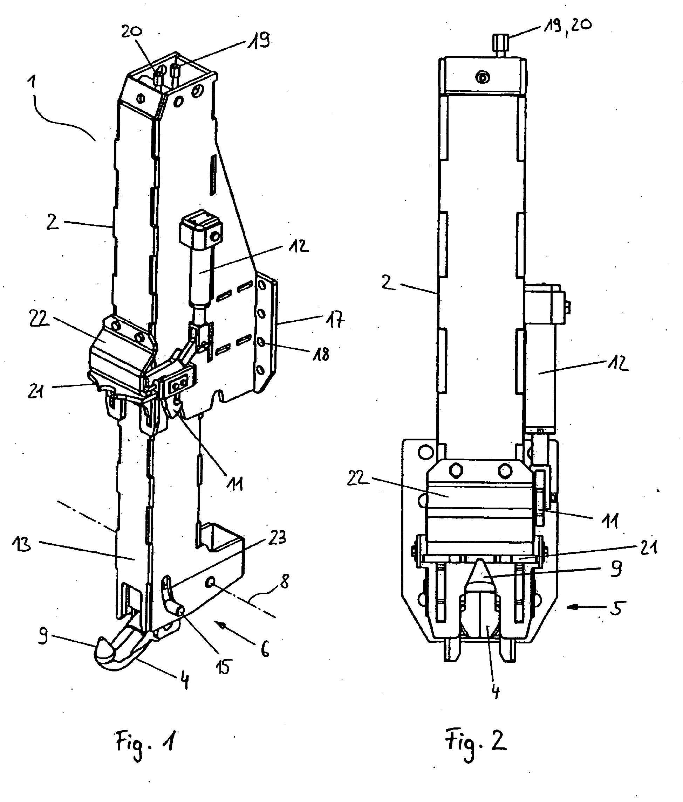

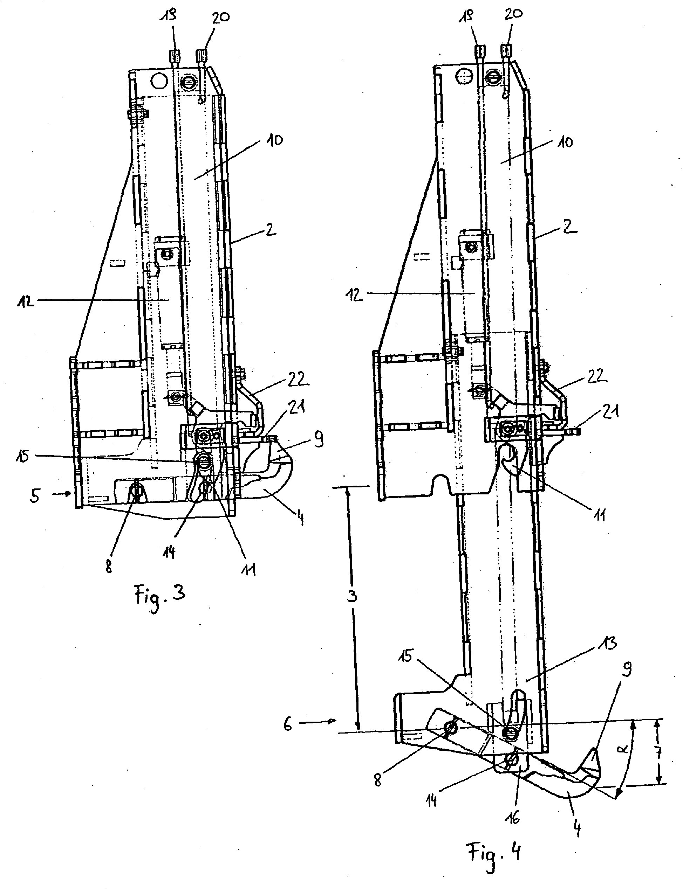

In den Figuren 1 bis 4 ist eine erfindungsgemäße Zugvorrichtung 1 dargestellt, welche an einem landwirtschaftlichen oder industriellen Fahrzeug angebracht werden kann. Das Fahrzeug oder Teile davon sind nicht dargestellt. Die Zugvorrichtung findet insbesondere bei Gabelstaplern, Traktoren, Arbeitsmaschinen, etc. Anwendung, wobei auch Lastkraftwagen denkbar wären. Zum Aufnehmen und Ankuppeln eines Anhängers oder eines Arbeitsgeräts ist ein Kupplungsteil 4 mit einem an dessen einen Ende angeordneten Zughaken 9 vorgesehen. Zur Höhenverstellung des Kupplungsteils 4 ist ein geradliniges Führungsmittel in Form eines kastenförmigen Bauteils 2 ausgebildet. Dieses Führungsmittel 2 ist an dem Fahrzeug im Wesentlichen vertikal anordenbar, sodass sich dadurch eine Höhenverstellung des Kupplungsteils 4 und damit des Zughakens 9 um einen ersten Hubweg 3 - siehe insbesondere Figur 4 - ergibt. Der Kupplungsteil 4 legt also bei einer Bewegung von seiner in Figur 3 dargestellten oberen Transportstellung 5, in welcher ein Anhänger oder ein Arbeitsgerät gezogen werden kann, in seine in Figur 4 dargestellte, untere abgesenkte Stellung 6 allein aufgrund der geradlinigen, vertikalen Bewegung in dem Führungsmittel 2 die Strecke des ersten Hubwegs 3 zurück. In dem gezeigten Beispiel ist dieser mit 505 mm realisiert. Andere Hubwege sind aber ebenfalls denkbar.

Zusätzlich zu dieser geradlinigen Bewegung kann der Kupplungsteil 4 erfindungsgemäß verschwenkt werden. Wie in den Figuren 1 und 4 ersichtlich ist, wird dabei der Kupplungsteil 4 über die geradlinige Bewegung hinaus nach unten geklappt. Diese zusätzliche Bewegung kann beim Herablassen des Kupplungsteils 4 bereits in der oberen Transportstellung 5 erfolgen. Alternativ wäre es genauso möglich, zuerst eine rein geradlinige Bewegung zu bewirken und erst in der unteren abgesenkten Stellung 6 den Kupplungsteil 4 zu verschwenken. Bei der Ausgestaltung wie sie in den Figuren beispielhaft dargestellt ist, kann sich auch ergeben, dass sich die beiden Bewegungen überlagern und daher gleichzeitig ablaufen. Der beste Schutz bei gleichzeitig sicherer Ankopplung ergibt sich, wenn der Kupplungsteil 4 bereits in der oberen Transportstellung 5 nach unten verschwenkt wird, dann geradlinig nach unten in seine untere abgesenkte Stellung 6 bewegt wird, um eine Zugöse oder Ähnliches aufzunehmen, danach nach oben verschwenkt und erst zuletzt wieder geradlinig nach oben in seine obere Transportstellung 5 bewegt wird.

Zum Zweck der Schwenkbewegung ist der Kupplungsteil 4 an einer horizontalen Achse 8 in einem Halteteil 13 gelagert. Der Halteteil ist in Form eines Schlittens 13 ausgebildet und wird lediglich vertikal und geradlinig zwischen der oberen Transportstellung 5 und der unteren abgesenkten Stellung 6 auf und ab bewegt. Um die horizontale Achse 8, welche an dem Halteteil 13 angeordnet ist, kann der Kupplungsteil 4 nach unten bzw. danach wieder nach oben verschwenkt werden. Zur Bewegung des Kupplungsteils 4 und des Halteteils 13 entlang der geradlinigen Führungsmittel 2 ist ein erster Hydraulikzylinder 10 vorgesehen. In dem gezeigten Ausführungsbeispiel wird dieser auch gleichzeitig für die Schwenkbewegung des Kupplungsteils 4 relativ zum Halteteil 13 genützt. Dazu ist der erste Hydraulikzylinder 10 an seinem einen, als U-förmiges Blech 16 ausgebildeten Ende mit dem Kupplungsteil 4 über einen Bolzen 14 drehbar verbunden. Dadurch greift der erste Hydraulikzylinder 10 nicht an dem Halteteil 13, sondern direkt an dem Kupplungsteil 4 an, sodass dieses nicht über einen weiteren Hydraulikzylinder getrennt von dem Halteteil 13 bewegt werden muss.

Zum Festlegen des Kupplungsteils 4 in seiner oberen Transportstellung 5 ist ein Sicherungsmittel in Form einer Klinke 11 angebracht. Diese ist so gestaltet, dass sie in ihrer Sicherungsstellung einen an dem Kupplungsteil 4 oder dem U-förmigen Blech 16 des ersten Hydraulikzylinders 10 angeordneten Zapfen 15 hintergreifen kann. Der Zapfen 15 durchgreift eine seitliche, kreisbogenförmige Ausnehmung 23 in dem Halteteil 13. Zapfen 15 und

Ausnehmung 23 erlauben eine Verschwenkbarkeit des Kupplungsteils 4 um einen Winkel α, der in dem gezeigten Beispiel etwa 30° beträgt. Zum Lösen und Festlegen der Klinke 11 ist ein zweiter Hydraulikzylinder 12 angeordnet. Sowohl die Klinke 11 als auch der Kupplungsteil 4 sind daher ferngesteuert, beispielsweise von der Fahrerkanzel aus, bedienbar. Über der Klinke 11 ist eine Abdeckung in Form eines Schutzbügels 22 angebracht, sodass die Klinke 11 vor Beschädigungen und Fehlfunktionen geschützt ist.

Die beiden Hydraulikzylinder 10 und 12 werden über Hydraulik-Leitungen mit Hydrauliköl versorgt. Zu deren Verbindung mit einer Druckquelle sind die Anschlüsse 19 und 20 vorgesehen.

Damit eine Zugöse oder eine Kugelpfanne eines angekuppelten Anhängers oder Arbeitsgerätes nicht von dem Kupplungsteil 4, insbesondere dem Zughaken 9 beziehungsweise einer Kupplungskugel abgezogen werden kann, weist die Zugvorrichtung 1 einen Niederhalter 21 auf. Dieser wirkt mit dem Zughaken 9 bzw. bei entsprechender Ausbildung mit der Kupplungskugel derart zusammen, dass die Zugöse bzw. die Kugelpfanne gegen ein Abziehen nach oben gesichert ist. In dem gezeigten Ausführungsbeispiel besteht der Niederhalter aus einem horizontal angeordneten, nach hinten auskragenden Blechteil, welcher über zwei schwalbenschwanzartige Fortsätze verfügt. Diese Ausgestaltung lässt einerseits maximale Bewegungsfreiheit beim Rangieren des Anhängers zu, stellt aber andererseits eine zuverlässige Sicherung dar.

Zur Befestigung der gesamten Zugvorrichtung 1 an einem Fahrzeug ist an dem als Führungsmittel dienenden kastenförmigen Bauteil 2 eine Montageplatte 17 ausgebildet. Mithilfe dieser Montageplatte 17 wird die Zugvorrichtung an eine dafür vorgesehene Stelle beispielsweise am Heck des Fahrzeugs befestigt, insbesondere mit Schrauben oder Bolzen, welche durch zu diesem Zweck angeordnete Löcher 18 greifen.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Zugvorrichtung (1) für ein landwirtschaftliches oder industrielles Fahrzeug, mit einem im Wesentlichen geradlinigen Führungsmittel (2), das an dem Fahrzeug im Wesentlichen vertikal anordenbar ist, und mit einem entlang des Führungsmittels (2) um einen ersten Hubweg (3) verstellbaren Kupplungsteil (4) mit einer oberen Transportstellung (5) und einer unteren abgesenkten Stellung (6), **dadurch gekennzeichnet, dass** der Kupplungsteil (4) verschwenkbar ist.

2. Zugvorrichtung (1) nach Anspruch 1, **dadurch gekennzeichnet, dass** der Kupplungsteil (4) derart verschwenkbar ist, dass sich ein über den ersten Hubweg (3) des im Wesentlichen geradlinigen Führungsmittels (2) hinausgehender, zusätzlicher zweiter Hubweg (7) ergibt.

3. Zugvorrichtung (1) nach Anspruch 1 oder 2, **dadurch gekennzeichnet, dass** der Kupplungsteil (4) um eine im Wesentlichen horizontale Achse (8) verschwenkbar ist.

4. Zugvorrichtung (1) nach einem der vorhergehenden Ansprüche, **dadurch gekennzeichnet, dass** der Kupplungsteil (4) in der abgesenkten Stellung (6) um einen Winkel (α), insbesondere zwischen 10° und 60°, bevorzugt zwischen 15° und 45°, besonders bevorzugt etwa 30°, verschwenkbar ist.

5. Zugvorrichtung (1) nach einem der vorhergehenden Ansprüche, **dadurch gekennzeichnet, dass** der Kupplungsteil (4) in der oberen Transportstellung (5) um einen Winkel (α), insbesondere zwischen 10° und 60°, bevorzugt zwischen 15° und 45°, besonders bevorzugt etwa 30°, verschwenkbar ist.

6. Zugvorrichtung (1) nach einem der vorhergehenden Ansprüche, **dadurch gekennzeichnet, dass** der Kupplungsteil (1) einen Zughaken (9) aufweist.

7. Zugvorrichtung (1) nach einem der Ansprüche 1 bis 5, **dadurch gekennzeichnet, dass** der Kupplungsteil (4) eine Zugkugel aufweist.

8. Zugvorrichtung (1) nach einem der vorhergehenden Ansprüche, **dadurch gekennzeichnet, dass** zumindest ein erster Hydraulikzylinder (10) zur Bewegung des Kupplungsteils (4) entlang des im Wesentlichen geradlinigen Führungsmittels (2) angeordnet ist.

9. Zugvorrichtung (1) nach Anspruch 8, **dadurch gekennzeichnet, dass** der erste Hydraulikzylinder (10) auch zur Schwenkbewegung des Kupplungsteils (4) vorgesehen ist.

10. Zugvorrichtung (1) nach einem der vorhergehenden Ansprüche, **dadurch gekennzeichnet, dass** zumindest ein Sicherungsmittel (11), insbesondere eine Klinke, zur Sicherung des Kupplungsteils (4) in der oberen Transportstellung (5) vorgesehen ist.

11. Zugvorrichtung (1) nach Anspruch 10, **dadurch gekennzeichnet, dass** zumindest ein zweiter Hydraulikzylinder (12) zur Betätigung des Sicherungsmittels (11), insbesondere der Klinke, vorgesehen ist.

12. Zugvorrichtung (1) nach einem der vorhergehenden Ansprüche, **dadurch gekennzeichnet, dass** der Kupplungsteil (4) ein gehärtetes Metall und/oder ein Schmiedeteil umfasst.

13. Zugvorrichtung (1) nach einem der vorhergehenden Ansprüche, **dadurch gekennzeichnet, dass** der erste Hubweg (3) zwischen 300 mm und 800 mm, insbesondere zwischen 450 mm und 550 mm, besonders bevorzugt etwa 500 mm beträgt.

14. Zugvorrichtung (1) nach einem der Ansprüche 2 bis 13, **dadurch gekennzeichnet, dass** der zusätzliche zweite Hubweg (7) durch die Schwenkbewegung des Kupplungsteils (4) an dessen Ende zwischen 50 mm und 300 mm, insbesondere zwischen 100 mm und 200 mm, besonders bevorzugt etwa 150 mm beträgt.

15. Zugvorrichtung (1) nach einem der vorhergehenden Ansprüche, **dadurch gekennzeichnet, dass** in oder an dem Führungsmittel (2) ein Halteteil (13), insbesondere ein Schlitten, geführt ist.

16. Zugvorrichtung (1) nach Anspruch 15, **dadurch gekennzeichnet, dass** der Kupplungsteil (4) an dem Halteteil (13), insbesondere dem Schlitten, verschwenkbar angeordnet ist.

17. Zugvorrichtung (1) nach einem der vorhergehenden Ansprüche, **dadurch gekennzeichnet, dass** das Führungsmittel (2) ein kasten- oder rohrförmiges Bauteil umfasst.

## Claims

1. A traction apparatus (1) for an agricultural or industrial vehicle, comprising a substantially straight guide means (2) which can be arranged on the vehicle in a substantially vertical way, and a hitch part (4) which is adjustable along the guide means (2) about a first path of travel (3) and has an upper transport position (5) and a bottom lowered position (6), **characterized in that** the hitch part (4) is swivelable.

2. A traction apparatus (1) according to claim 1, **characterized in that** the hitch part (4) can be swiveled in such a way that an additional second path of travel (7) is obtained which goes beyond the first path of travel (3) of the substantially straight guide means (2).

3. A traction apparatus (1) according to claim 1 or 2, **characterized in that** the hitch part (4) can be swiveled about a substantially horizontal axis (8).

4. A traction apparatus (1) according to one of the preceding claims, **characterized in that** the hitch part (4) is swivelable in the lowered position (6) about an angle (α), especially between 10° and 60°, preferably between 15° and 45°, especially preferably approx. 30°.

5. A traction apparatus (1) according to one of the preceding claims, **characterized in that** the hitch part (4) is swivelable in the upper transport position (5) about an angle (α), especially between 10° and 60°, preferably between 15° and 45°, especially preferably approx. 30°.

6. A traction apparatus (1) according to one of the preceding claims, **characterized in that** the hitch part (1) comprises a draw hook (9).

7. A traction apparatus (1) according to one of the claims 1 to 5, **characterized in that** the hitch part (4) comprises a ball hitch.

8. A traction apparatus (1) according to one of the preceding claims, **characterized in that** at least one first hydraulic cylinder (10) is arranged for moving the hitch part (4) along the substantially straight guide means (2).

9. A traction apparatus (1) according to claim 8, **characterized in that** the first hydraulic cylinder (10) is also provided for the swiveling movement of the hitch part (4).

10. A traction apparatus (1) according to one of the preceding claims, **characterized in that** at least one securing means (11), especially a catch, is provided for securing the hitch part (4) in the upper transport position (5).

11. A traction apparatus (1) according to claim 10, **characterized in that** at least one second hydraulic cylinder (12) is provided for actuating the securing means (11), especially the catch.

12. A traction apparatus (1) according to one of the preceding claims, **characterized in that** the hitch part (4) comprises a hardened metal and/or a forged part.

13. A traction apparatus (1) according to one of the preceding claims, **characterized in that** the first path of travel (3) is between 300 mm and 800 mm, especially between 450 mm and 550 mm, especially preferably approx, 500 mm.

14. A traction apparatus (1) according to one of the claims 2 to 13, **characterized in that** the additional second path of travel (7) by the swiveling movement of the hitch part (4) at its end is between 50 mm and 300 mm, especially 100 mm and 200 mm, especially preferably approx. 150 mm.

15. A traction apparatus (1) according to one of the preceding claims, **characterized in that** a holding part (13), especially a carriage, is guided in or on the guide means (2).

16. A traction apparatus (1) according to claim 15, **characterized in that** the hitch part (4) is swivelably arranged on the holding part (13), especially the carriage.

17. A traction apparatus (1) according to one of the preceding claims, **characterized in that** the guide means (2) comprises a box-like or tubular component.

## Revendications

1. Dispositif de traction (1) pour un véhicule agricole ou industriel, avec un moyen de guidage (2) sensiblement rectiligne qui peut être disposé sensiblement à la verticale sur le véhicule, et avec une partie d'attelage (4) mobile le long du moyen de guidage (2) sur une première distance de course (3) avec une position haute de transport (5) et une position basse abaissée (6), **caractérisé en ce que** la partie d'attelage (4) est pivotante.

2. Dispositif de traction (1) selon la revendication 1, **caractérisé en ce que** la partie d'attelage (4) peut pivoter de telle façon qu'il se crée une deuxième distance de course (7) supplémentaire, dépassant la première distance de course (3) du moyen de guidage (2) sensiblement rectiligne.

3. Dispositif de traction (1) selon la revendication 1 ou 2, **caractérisé en ce que** la partie d'attelage (4) peut pivoter autour d'un axe (8) sensiblement horizontal.

4. Dispositif de traction (1) selon l'une des revendications précédentes, **caractérisé en ce que** la partie d'attelage (4) peut pivoter dans la position abaissée (6) d'un angle (α) compris en particulier entre 10° et 60°, de préférence entre 15° et 45°, notamment d'environ 30°.

5. Dispositif de traction (1) selon l'une des revendications précédentes, **caractérisé en ce que** la partie d'attelage (4) peut pivoter dans la position haute de transport (5) d'un angle (α) compris en particulier entre 10° et 60°, de préférence entre 15° et 45°, notamment d'environ 30°.

6. Dispositif de traction (1) selon l'une des revendications précédentes, **caractérisé en ce que** la partie d'attelage (1) présente un crochet de traction (9).

7. Dispositif de traction (1) selon l'une des revendications 1 à 5, **caractérisé en ce que** la partie d'attelage (4) présente une boule de traction.

8. Dispositif de traction (1) selon l'une des revendications précédentes, **caractérisé en ce qu'**au moins un premier vérin hydraulique (10) est prévu pour déplacer la partie d'attelage (4) le long du moyen de guidage (2) sensiblement rectiligne.

9. Dispositif de traction (1) selon la revendication 8, **caractérisé en ce que** le premier vérin hydraulique (10) est également prévu pour le mouvement pivotant de la partie d'attelage (4).

10. Dispositif de traction (1) selon l'une des revendications précédentes, **caractérisé en ce qu'**au moins un moyen de fixation (11), en particulier un cliquet, est prévu pour fixer la partie d'attelage (4) dans la position haute de transport (5).

11. Dispositif de traction (1) selon la revendication 10, **caractérisé en ce qu'**au moins un deuxième vérin hydraulique (12) est prévu pour actionner le moyen de fixation (11), en particulier le cliquet.

12. Dispositif de traction (1) selon l'une des revendications précédentes, **caractérisé en ce que** la partie d'attelage (4) comprend un métal durci et/ou une pièce forgée.

13. Dispositif de traction (1) selon l'une des revendications précédentes, **caractérisé en ce que** la première distance de course (3) est comprise entre 300 mm et 800 mm, en particulier entre 450 mm et 550 mm, de préférence d'environ 500 mm.

14. Dispositif de traction (1) selon l'une des revendications 2 à 13, **caractérisé en ce que** la deuxième distance de course (7) supplémentaire réalisée par le mouvement pivotant de la partie d'attelage (4) à son extrémité est comprise entre 50 mm et 300 mm, en particulier entre 100 mm et 200 mm, de préférence d'environ 150 mm.

15. Dispositif de traction (1) selon l'une des revendications précédentes, **caractérisé en ce qu'**une partie de maintien (13), en particulier un chariot, est guidée dans le moyen de guidage (2).

16. Dispositif de traction (1) selon la revendication 15, **caractérisé en ce que** la partie d'attelage (4) est disposée sur la partie de maintien (13), en particulier le chariot, de façon pivotante.

17. Dispositif de traction (1) selon l'une des revendications précédentes, **caractérisé en ce que** le moyen de guidage (2) comprend une pièce en forme de caisson ou de tube.
